# EUROPEAN PATENT APPLICATION

(11) **EP 4 420 904 A1**
(43) Date of publication of application: **28.08.2024**
(21) Application number: 22894775.0
(22) Date of filing: 15.11.2022
(51) Int. Cl.: B60H 1/00, B60K 1/00, B60L 58/26, B60L 58/27, F25B 39/00, F25B 41/31

(54) **HEAT EXCHANGE SYSTEM AND VEHICLE**

(30) Priority: 17.11.2021 CN 202111361140
(71) Applicant: Huawei Technologies Co., Ltd., Shenzhen, Guangdong 518129 (CN)
(72) Inventor: YUAN, Zhi, Shenzhen, Guangdong 518129 (CN); LI, Haipeng, Shenzhen, Guangdong 518129 (CN); LIU, Chaopeng, Shenzhen, Guangdong 518129 (CN); LI, Quanming, Shenzhen, Guangdong 518129 (CN)
(74) Representative: Thun, Clemens
(86) International application number: PCT/CN2022/131961
(87) International publication number: WO 2023/088242

(57) **Abstract**

A heat exchange system and a vehicle are provided. The heat exchange system includes: a multi-way valve (05), an air duct (091), and at least one heat exchanger (1) disposed in the air duct (091). The heat exchanger (1) is provided with an air channel through which air passes, a water inlet and a water outlet of the at least one heat exchanger (1) communicate with the multi-way valve (05) through a water pipe group (03), a refrigerant inlet of the at least one heat exchanger (1) communicates with a refrigerant outlet of the at least one heat exchanger (1) through a refrigerant pipe group (04), and an electronic expansion valve (042) is disposed on the refrigerant pipe group (04). The multi-way valve (05) is further configured to communicate with a heat exchange unit (31), and when heat exchange is performed on the heat exchange unit (31), the multi-way valve (05) makes the heat exchange unit (31), the multi-way valve (05), the water pipe group (03), and the heat exchanger (1) be in one circulation loop.

## Description

### CROSS-REFERENCE TO RELATED APPLICATIONS

This application claims priority to Chinese Patent Application No. 202111361140.8, filed with the China National Intellectual Property Administration on November 17, 2021 and entitled "HEAT EXCHANGE SYSTEM AND VEHICLE", which is incorporated herein by reference in its entirety.

### TECHNICAL FIELD

This application relates to the field of heat exchange technologies, and in particular, to a heat exchange system and a vehicle.

### BACKGROUND

A heat management system of a new energy vehicle usually includes a refrigerant loop of an air conditioning system, a battery liquid cooling loop, and a motor liquid cooling loop. A main function of the heat management system is to control heat exchange between a plurality of working media to ensure that temperature of a controlled object such as a passenger compartment, battery pack, or motor is within a target range. However, a heat management system usually needs to use a plurality of heat exchangers, for example, a plate heat exchanger for heat exchange between a refrigerant and water, and a parallel-flow heat exchanger for heat exchange between air and water or between air and a refrigerant.

Because heat management systems in a conventional technology mostly use two-fluid heat exchangers, a large quantity of heat exchangers are required. Consequently, a pipe group of the heat management system is complex, has a large size, and is difficult to arrange.

### SUMMARY

This application provides a heat exchange system and a vehicle. The heat exchange system has a small quantity of components, reducing complexity of a pipe group in the heat exchange system and reducing difficulty in arrangement.

According to a first aspect, the heat exchange system in this application may include a multi-way valve, an air duct, and at least one heat exchanger disposed in the air duct. The heat exchanger is provided with an air channel through which air passes, a water inlet and a water outlet of the at least one heat exchanger communicate with the multi-way valve through a water pipe group, a refrigerant inlet of the at least one heat exchanger communicates with a refrigerant outlet of the at least one heat exchanger through a refrigerant pipe group, and an electronic expansion valve is disposed on the refrigerant pipe group. The multi-way valve is further configured to communicate with a heat exchange unit, and when heat exchange is performed on the heat exchange unit, the multi-way valve makes the heat exchange unit, the multi-way valve, the water pipe group, and the heat exchanger be in one circulation loop. The refrigerant inlet and the refrigerant outlet may form a refrigerant channel inside the heat exchanger, and the water inlet and the water outlet may form a water channel inside the heat exchanger. In other words, a refrigerant, water, and air may pass through the heat exchanger, and the refrigerant, the water, and the air may exchange heat with each other. In this way, a quantity of heat exchangers in the heat exchange system can be reduced, and complexity of a refrigerant loop and a water loop can be reduced due to reduction of the quantity of heat exchangers, reducing complexity of a pipe group in the heat exchange system and reducing difficulty in arranging the heat exchange system. In addition, when heat exchange needs to be performed on the heat exchange unit, the multi-way valve may make the heat exchange unit, the water pipe group, and the at least one heat exchanger be in one circulation loop. In this case, in the heat exchanger, heat may be exchanged between a pipeline that is of the refrigerant inlet and the refrigerant outlet and that is inside the heat exchanger and a pipeline that is of the water inlet and the water outlet and that is inside the heat exchanger, and heat may also be exchanged between the air channel and the pipeline that is of the water inlet and the water outlet and that is inside the heat exchanger. This can improve a heat exchange speed, to improve heat exchange efficiency of the heat exchange system.

In a possible embodiment, there may be two heat exchangers, and the two heat exchangers may be respectively an evaporator and a condenser. Both the evaporator and the condenser are disposed in the air duct. The water pipe group may include a first water pipe group and a second water pipe group. A water inlet of the evaporator and a water outlet of the evaporator may communicate with the multi-way valve through the first water pipe group, and a water inlet of the condenser and a water outlet of the condenser may communicate with the multi-way valve through the second water pipe group. A refrigerant outlet of the evaporator may communicate with a refrigerant inlet of the condenser through the refrigerant pipe group, and a refrigerant outlet of the condenser may communicate with a refrigerant inlet of the evaporator through the refrigerant pipe group. The two heat exchangers are disposed, so that a heat exchange speed can be increased, the heat exchange system can be further simplified, and difficulty in arranging the heat exchange system can be reduced.

It should be noted that, when there are two heat exchangers, and the two heat exchangers are an evaporator and a condenser, a compressor may be disposed between the refrigerant outlet of the evaporator and the refrigerant inlet of the condenser, so that a refrigerant can flow between the evaporator and the condenser.

In a possible embodiment, a first water pump may be disposed in the first water pipe group, to increase a speed of water flow between the evaporator and the multi-way valve; and a second water pump may be disposed in the second water pipe group, to increase a speed of water flow between the condenser and the multi-way valve.

In the foregoing embodiment, the heat exchange unit may include a battery pack component. The battery pack component may include a battery pack and a third water pipe group, the battery pack may communicate with the multi-way valve through the third water pipe group, and a third water pump may be disposed in the third water pipe group. When heat is dissipated for the battery pack, the multi-way valve is configured for communication of the evaporator, the first water pipe group, the third water pump, the third water pipe group, and the battery pack. In this manner, when exchanging heat with a refrigerant in the evaporator, high-temperature water in the battery pack may further exchange heat with air in an air channel of the evaporator, to increase a heat exchange speed and quickly cool the battery pack. When the battery pack is heated, the multi-way valve is configured for communication of the condenser, the second water pipe group, the third water pump, the third water pipe group, and the battery pack. When exchanging heat with a refrigerant in the condenser, low-temperature water in the battery pack may further exchange heat with air in an air channel of the condenser, to increase a heat exchange speed and quickly heat the battery pack.

The heat exchange unit may further include a powertrain component. The powertrain component may include a powertrain and a fourth water pipe group. The powertrain may communicate with the multi-way valve through the fourth water pipe group, and a fourth water pump is disposed in the fourth water pipe group. When heat is dissipated for the powertrain, the evaporator, the first water pipe group, the fourth water pump, the fourth water pipe group, and the powertrain may communicate with each other through the multi-way valve. In this case, the powertrain can dissipate heat through the evaporator, so that the powertrain can be quickly cooled. In addition, when the heat exchange unit further includes a front-end component, the front-end component includes a front-end module and a fifth water pipe group, and the front-end module may communicate with the multi-way valve through the fifth water pipe group. When heat is dissipated for the powertrain, the powertrain, the fourth water pipe group, the fourth water pump, the fifth water pipe group, and the front-end module may communicate with each other through the multi-way valve. In this case, an operating status of the multi-way valve may be adjusted, so that the powertrain component can dissipate heat through the front-end component.

In a possible embodiment, the heat exchange system may further include a housing, a first switch, and a second switch. An air inlet and an air outlet may be provided on the housing, and the air duct may be formed between the air inlet and the air outlet. The evaporator, the condenser, the first switch, and the second switch may be all disposed in the air duct. When the first switch is in a first state and the second switch is in a second state, air in the air duct may pass through the air channel of the evaporator, and does not pass through the air channel of the condenser, so that air discharged from the air outlet is cold air. When the first switch is in a second state and the second switch is in a first state, air in the air duct passes through the air channel of the condenser, and does not pass through the air channel of the evaporator, so that air discharged from the air outlet is hot air. When the first switch is in the first state and the second switch is in the first state, air in the air duct passes through the air channel of the evaporator and the air channel of the condenser, and air discharged from the air outlet is dehumidified normal-temperature air.

To enable the air outlet to discharge fresh air, a fresh air inlet may be further provided on the housing, so that air other than air that enters through the air inlet can enter the air duct. In addition, to enable air that enters the air duct to flow quickly, a fan may be further disposed in the air duct (in the housing). The fan may increase a flow speed of air that enters the air duct through the air inlet and the fresh air inlet.

According to a second aspect, this application further provides a vehicle. The vehicle has the heat exchange system and the heat exchange unit according to any one of the foregoing technical solutions. In the vehicle using the heat exchange system, a heat exchange speed of the heat exchange unit is increased, difficulty in arranging the heat exchange system is reduced, and speeds of discharging cold air and hot air in the vehicle can be increased.

### BRIEF DESCRIPTION OF DRAWINGS

FIG. 1 is a schematic diagram of a structure of a heat management system in a conventional technology;
FIG. 2a is a schematic diagram of a structure of a heat exchange system according to an embodiment of this application;
FIG. 2b is another schematic diagram of a structure of a heat exchange system according to an embodiment of this application;
FIG. 2c is still another schematic diagram of a structure of a heat exchange system according to an embodiment of this application;
FIG. 3a to FIG. 3c are still other schematic diagrams of a structure of a heat exchange system according to an embodiment of this application;
FIG. 4 is a diagram of an architecture of a heat exchange system according to an embodiment of this application;
FIG. 5 is a schematic diagram of a structure of a heat exchanger in a heat exchange system according to an embodiment of this application;
FIG. 6 is a partial schematic exploded view of the heat exchanger 1 shown in FIG. 1;
FIG. 7 is a partial sectional view of the heat exchanger shown in FIG. 1;
FIG. 8 is a schematic diagram of a structure of a heat exchange unit in a heat exchanger according to an embodiment of this application;
FIG. 9 is a schematic exploded view of the heat exchange unit shown in FIG. 8;
FIG. 10 is a schematic diagram of a structure of another heat exchanger according to an embodiment of this application;
FIG. 11 is a partial schematic exploded view of the heat exchanger shown in FIG. 10;
FIG. 12 is a schematic diagram of a structure of another heat exchanger according to an embodiment of this application;
FIG. 13 is a partial schematic exploded view of the heat exchanger shown in FIG. 12;
FIG. 14 is a schematic diagram of a structure of another heat exchanger according to an embodiment of this application;
FIG. 15 is a schematic diagram of a structure of another heat exchanger according to an embodiment of this application;
FIG. 16 is a partial schematic exploded view of the heat exchanger shown in FIG. 15;
FIG. 17 is a schematic diagram of a structure of another heat exchanger according to an embodiment of this application;
FIG. 18 is a schematic diagram of a structure of another heat exchanger according to an embodiment of this application; and
FIG. 19 is a partial schematic exploded view of the heat exchanger shown in FIG. 18.

### Reference numerals:

01: evaporator; 02: condenser; 03: water pipe group; 031: first water pipe group; 032: second water pipe group; 04: refrigerant pipe group; 041: compressor; 042: electronic expansion valve; 05: multi-way valve; 06: battery pack component; 061: battery pack; 062: third water pipe group; 063: third water pump; 07: powertrain component; 071: powertrain; 072: fourth water pipe group; 073: fourth water pump; 08: front-end component; 081: front-end module; 082: fifth water pipe group; 09: housing; 091: air duct; 092: air inlet; 093: air outlet; 094: first switch; 095: second switch; 096: fan; 097: fresh air inlet; 1: heat exchanger; 10: first collector; 20: second collector; 30: heat exchange core; 11: first chamber; 12: second chamber; 21: third chamber; 22: fourth chamber; 31: heat exchange unit; 311: fin; 312: flow-guiding member; 3121: first flow channel; 3122: second flow channel; 111: first opening; 112: first flow-dividing opening; 211: third opening; 121: second opening; 122: second flow-dividing opening; 221: fourth opening; 123: first housing; 124: first side wall; 125: first sealing ring; 223: second housing; 1241: first through hole; 224: second sealing ring; 1111: first extension pipe; 1112: third sealing ring; 2111: second extension pipe; 2231: fourth through hole; 2112: fourth sealing ring; 3123: dividing plate; 213: first baffle plate; 214a and 214b: first sub-chamber; 126: second baffle plate; 127a and 127b: second sub-chamber.

### DESCRIPTION OF EMBODIMENTS

To make objectives, technical solutions, and advantages of this application clearer, the following further describes this application in detail with reference to accompanying drawings.

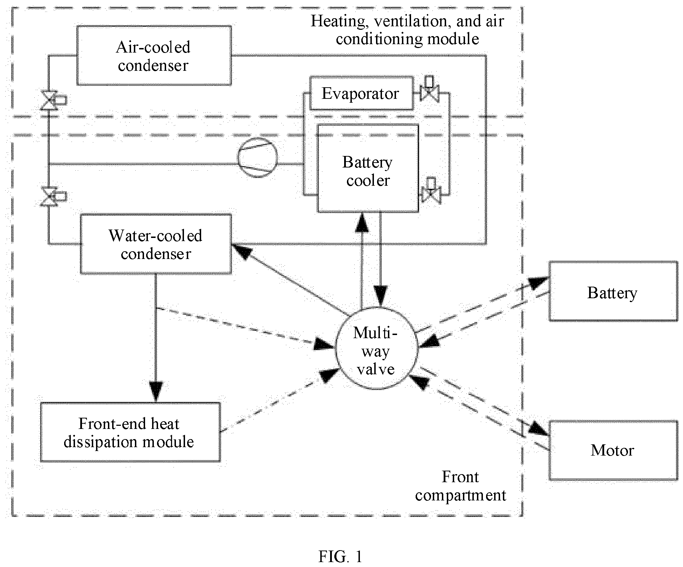

A heat management system is an important part of a new energy vehicle. In FIG. 1, an HVAC (heating, ventilation, and air conditioning, HVAC) module of the heat management system includes an air-cooled condenser and an evaporator, and the air-cooled condenser and the evaporator are connected to a plate heat exchanger. As a result, there are many heat exchange components in the heat management system, pipelines are complex, and arrangement is difficult. In addition, when a cockpit is heated in this setting manner, a heat response speed is slow and heat exchange efficiency is low.

Therefore, this application provides a heat exchange system to resolve the foregoing problem.

Terms used in the following embodiments are merely intended to describe specific embodiments, but are not intended to limit this application. The expressions "one", "a", "the", "the foregoing", "this", and "the one" of singular forms used in this specification and the appended claims of this application are also intended to include forms such as "one or more", unless otherwise specified in the context clearly.

Reference to "an embodiment", "some embodiments", or the like described in this specification means that one or more embodiments of this application include a specific feature, structure, or characteristic described with reference to the embodiment. Therefore, expressions such as "in an embodiment", "in some embodiments", "in some other embodiments", and " in other embodiments" that appear at different places in this specification do not necessarily mean reference to a same embodiment. Instead, the expressions mean "one or more but not all of embodiments", unless otherwise specifically emphasized in another manner. The terms "include", "comprise", "have", and their variants all mean "include but are not limited to", unless otherwise specifically emphasized in another manner.

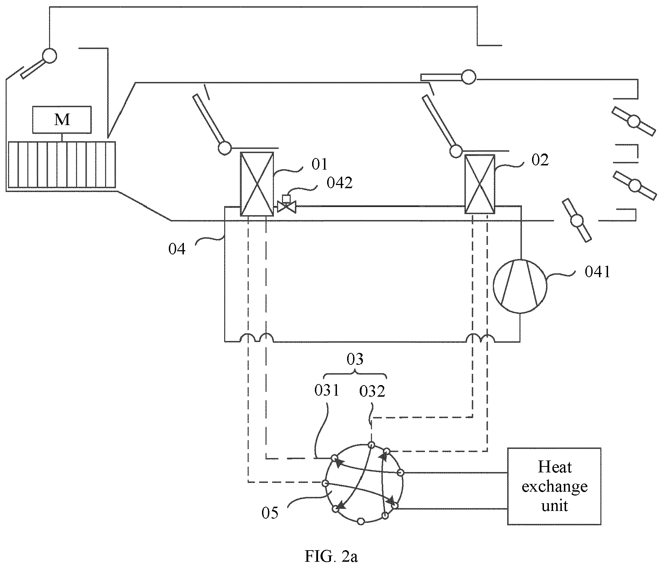

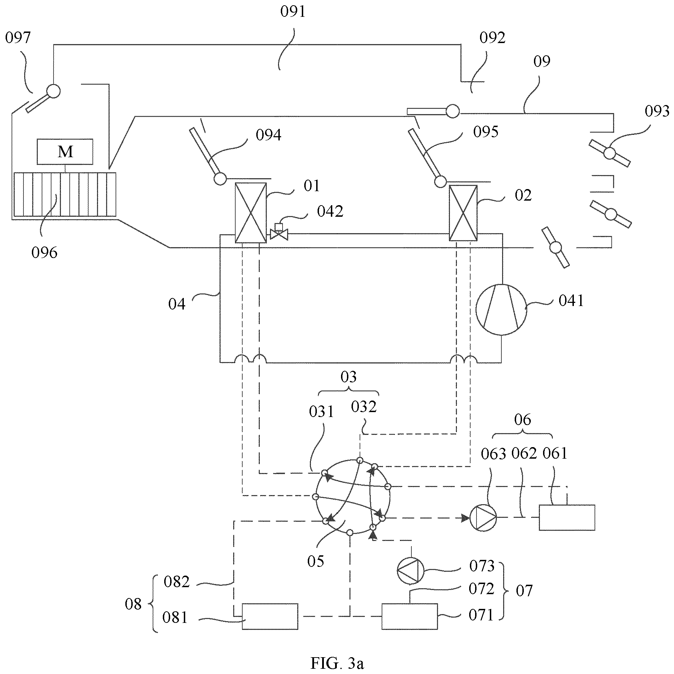

Refer to FIG. 2a and FIG. 3a. This application provides a heat exchange system. The heat exchange system includes a multi-way valve 05, an air duct 091, and at least one heat exchanger. The at least one heat exchanger is disposed in the air duct 091, and the at least one heat exchanger is provided with an air channel through which air passes. The at least one heat exchanger is further provided with a water inlet, a water outlet, a refrigerant outlet, and a refrigerant inlet. The water inlet and the water outlet of the at least one heat exchanger communicate with the multi-way valve 05 through a water pipe group 03. The refrigerant outlet and the refrigerant inlet of the at least one heat exchanger communicate with each other through a refrigerant pipe group 04, and an electronic expansion valve 042 is disposed on the refrigerant pipe group 04. The multi-way valve 05 may communicate with a heat exchange unit. When heat exchange is performed on the heat exchange unit, the multi-way valve 05 may make the heat exchange unit, the multi-way valve 05, the water pipe group, and the at least one heat exchanger be in one circulation loop. When heat exchange needs to be performed on the heat exchange unit, the multi-way valve 05 may make the heat exchange unit, the water pipe group, and the at least one heat exchanger be in one circulation loop. In this case, in the heat exchanger, heat may be exchanged between a pipeline that is of the refrigerant inlet and the refrigerant outlet and that is inside the heat exchanger and a pipeline that is of the water inlet and the water outlet and that is inside the heat exchanger, and heat may also be exchanged between the air channel and the pipeline that is of the water inlet and the water outlet and that is inside the heat exchanger. This can improve a heat exchange speed, to improve heat exchange efficiency of the heat exchange system. In addition, a refrigerant, water, and air can pass through the heat exchanger, so that a quantity of used components in the heat exchange system can be reduced, and complexity of a refrigerant loop and a water loop can be reduced, to reduce complexity of a pipe group in the heat exchange system and reduce difficulty in arrangement.

It should be noted that, three types of fluids can pass through the heat exchanger. The heat exchanger may replace two heat exchangers in a heat management system in a conventional technology, to simplify arrangement of a refrigerant pipeline and a water pipe group in the heat exchange system. In addition, because a quantity of heat exchangers is reduced, a quantity of components in the heat exchange system is reduced, so that a size of the heat exchange system and difficulty in arranging components in the heat exchange system are reduced.

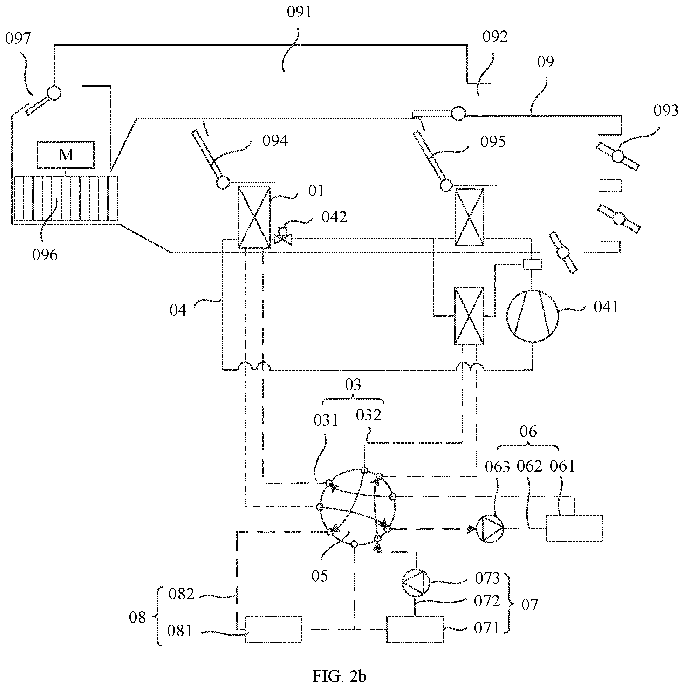

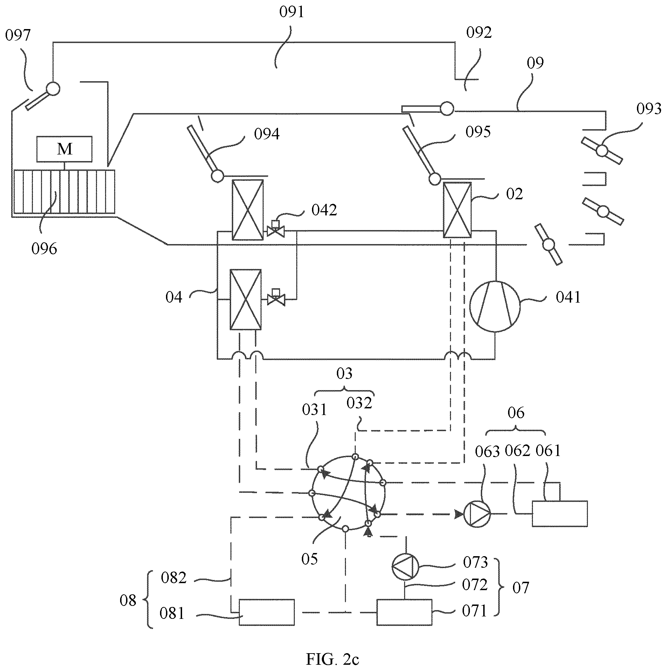

There may be one or two heat exchangers provided with an air channel, a water inlet, a water outlet, a refrigerant outlet, and a refrigerant inlet in the heat exchange system. Refer to FIG. 2b. When there is one heat exchanger provided with an air channel, a water inlet, a water outlet, a refrigerant outlet, and a refrigerant inlet, and the heat exchanger is an evaporator 01, two heat exchangers in the conventional technology are connected in parallel, and a three-way valve is disposed between the two heat exchangers in the conventional technology. One heat exchanger in the conventional technology communicates with the refrigerant pipe group 04 and the water pipe group 03, and the other heat exchanger in the conventional technology is disposed only on the refrigerant pipe group 04. In addition, both the two heat exchangers in the conventional technology are connected to the evaporator 01 through the electronic expansion valve 042. The foregoing heat exchanger replaces two heat exchangers in the conventional technology. Refer to FIG. 2c. When there is one heat exchanger provided with an air channel, a water inlet, a water outlet, a refrigerant outlet, and a refrigerant inlet, and the heat exchanger is a condenser 02, two heat exchangers in the conventional technology are connected in parallel, and the two heat exchangers in the conventional technology each are connected to the condenser 02 through one electronic expansion valve. One heat exchanger in the conventional technology communicates with the refrigerant pipe group 04 and the water pipe group 03, and the other heat exchanger in the conventional technology is disposed only on the refrigerant pipe group 04. The foregoing heat exchanger replaces two heat exchangers in the conventional technology. When there are two heat exchangers provided with an air channel, a water inlet, a water outlet, a refrigerant outlet, and a refrigerant inlet, the heat exchangers may replace four heat exchangers in the conventional technology. The following uses an example in which there are two heat exchangers described above.

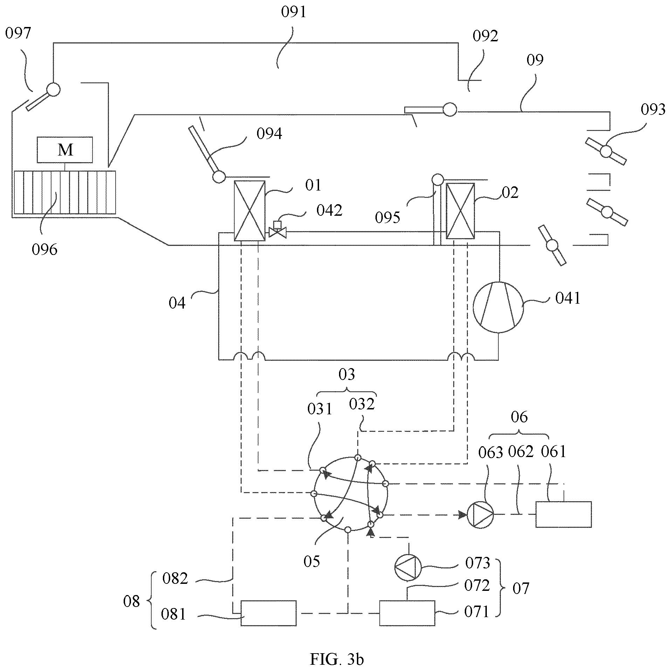

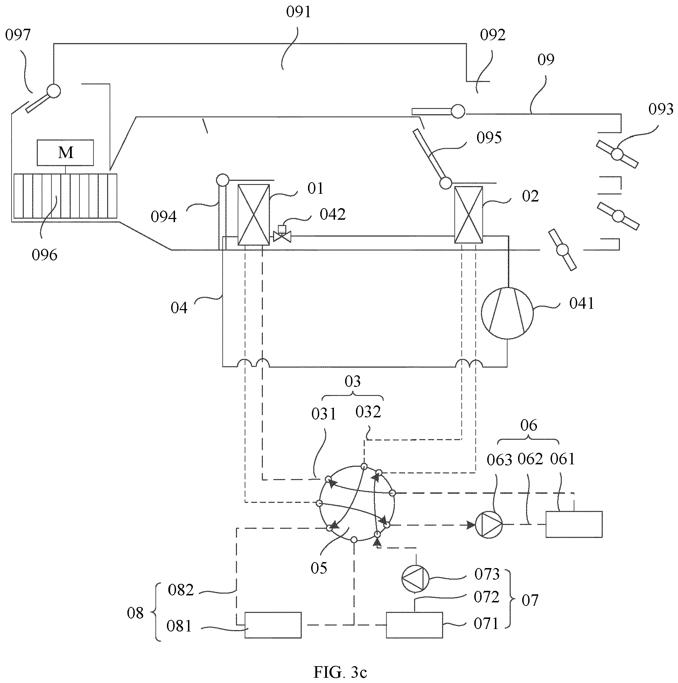

Still refer to FIG. 3 a. When there are two heat exchangers, the two heat exchangers may be respectively an evaporator 01 and a condenser 02, and both the evaporator 01 and the condenser 02 are disposed in the air duct 091. The water pipe group 03 may include a first water pipe group 031 and a second water pipe group 032. Both a water inlet of the evaporator 01 and a water outlet of the evaporator 01 may communicate with the multi-way valve 05 through the first water pipe group 031. Both a water inlet of the condenser 02 and a water outlet of the condenser 02 may communicate with the multi-way valve 05 through the second water pipe group 032. When a heat exchange unit needs to be cooled, the multi-way valve 05 may communicate with the evaporator 01 through the first water pipe group 031, and the multi-way valve 05 further communicates with the heat exchange unit that needs to be cooled, so that heat in the heat exchange unit can be continuously transmitted to the evaporator 01 to cool the heat exchange unit. In addition, a refrigerant outlet of the evaporator 01 may communicate with a refrigerant inlet of the condenser 02 through the refrigerant pipe group 04, and a refrigerant outlet of the condenser 02 may communicate with a refrigerant inlet of the evaporator 01 through the refrigerant pipe group 04. In this way, when the heat exchange unit needs to be cooled, a low-temperature refrigerant passes through the refrigerant inlet of the evaporator 01, and exchanges heat with high-temperature water that enters the evaporator 01 through the first water pipe group 031, temperature of the refrigerant is increased after the refrigerant absorbs heat of the water, and the refrigerant with increased temperature enters the condenser 02 through the refrigerant outlet of the evaporator 01. In addition, air in the air channel also exchanges heat with the high-temperature water that enters the heat exchanger, to improve a speed of cooling the heat exchange unit.

It should be noted that, when the first water pipe group 031 is specifically disposed, a first water pump may be disposed in the first water pipe group 031, to improve a circulation speed of water in a circulation loop having a first water pipe. In addition, when the second water pipe group 032 is specifically disposed, a first water pump may also be disposed in the second water pipe group 032, to improve a circulation speed of water in a circulation loop having a second water pipe. The first water pumps may be disposed in the first water pipe group 031 and the second water pipe group 032 respectively, or the first water pump is disposed in one of the first water pipe group 031 and the second water pipe group 032.

Still refer to FIG. 3a. In the foregoing embodiments, a compressor 041 may be further disposed in the refrigerant pipe group 04. A refrigerant discharged from the refrigerant outlet of the evaporator 01 enters the compressor 041. A high-temperature refrigerant is discharged from an outlet of the compressor 041, and may enter the condenser 02. In addition, the high-temperature refrigerant that enters the condenser 02 may condense and release heat. A high-pressure and high-temperature liquid refrigerant flows out from the refrigerant outlet of the condenser 02, and is rapidly cooled when throttled and expanded by the expansion valve to become a low-temperature and low-pressure refrigerant. The refrigerant enters the evaporator 01 for heat absorption and evaporation to become a low-pressure gas refrigerant, and then the refrigerant returns to the compressor 041, to form circulation of the refrigerant.

In the foregoing embodiments, the heat exchange unit may include a battery pack component 06, the battery pack component 06 may include a battery pack 061 and a third water pipe group 062, and a third water pump 063 may be disposed in a third water pipe. When temperature of the battery pack 061 is high and heat needs to be dissipated for the battery pack 061, an operating status of the multi-way valve 05 may be adjusted, so that the multi-way valve 05, the evaporator 01, the first water pipe group 031, the third water pump 063, the third water pipe group 062, and the battery pack 061 communicate with each other. Water releases heat and temperature of the water is decreased when the water passes through the evaporator 01, and then the water enters the multi-way valve 05 through the first water pipe group 031. The third water pump 063 may inject, into the battery pack 061 through the third water pipe group 062, the water that passes through the multi-way valve 05. After absorbing heat in the battery pack 061, the water returns to the evaporator 01 through the multi-way valve 05 to release heat. In such circulation and flow, heat in the battery pack 061 is continuously transmitted to the evaporator 01 to cool the battery pack 061. When temperature of the battery pack 061 is low and the battery pack 061 needs to be heated, an operating status of the multi-way valve 05 may be adjusted, so that the multi-way valve 05, the condenser 02, the second water pipe group 032, the third water pump 063, the third water pipe group 062, and the battery pack 061 communicate with each other. Water absorbs heat and temperature of the water is increased when the water passes through the condenser 02, and then the water enters the multi-way valve 05 through the second water pipe group 032. The third water pump 063 may inject, into the battery pack 061 through the third water pipe group 062, the water that passes through the multi-way valve 05. After releasing heat in the battery pack 061, the water enters the multi-way valve 05, and then returns to the condenser 02 through the second water pipe group 032 to absorb heat. In such circulation and flow, the battery pack 061 continuously absorbs heat from the condenser 02 through the third water pipe group 062, to implement heating of the battery pack 061.

The heat exchange unit may further include a powertrain component 07, and the powertrain component 07 may include a powertrain 071 and a fourth water pipe group 072. The powertrain 071 communicates with the multi-way valve 05 through the fourth water pipe group 072, and a fourth water pump 073 may be disposed in the fourth water pipe group 072. The powertrain 071 generates a large amount of heat during operating. When heat is dissipated for the powertrain 071, an operating status of the multi-way valve 05 may be adjusted, so that the multi-way valve 05, the evaporator 01, the first water pipe group 031, the fourth water pump 073, the fourth water pipe group 072, and the powertrain 071 are in one circulation loop. Water releases heat and temperature of the water is decreased when the water passes through the evaporator 01, and then the water enters the multi-way valve 05 through the first water pipe group 031. The fourth water pump 073 may inject, into the powertrain 071 through the fourth water pipe group 072, the water that passes through the multi-way valve 05. After absorbing heat in the powertrain 071, the water returns to the evaporator 01 through the multi-way valve 05 to release heat. In such circulation and flow, heat in the powertrain 071 is continuously transmitted to the evaporator 01 to cool the powertrain 071.

The heat exchange unit may further include a front-end component 08, and the front-end component 08 may include a front-end module 081 and a fifth water pipe group 082. The front-end module 081 may communicate with the multi-way valve 05 through the fifth water pipe group 082. When temperature of the powertrain 071 is high, an operating status of the multi-way valve 05 is adjusted, so that the powertrain 071, the fourth water pipe group 072, the fourth water pump 073, the fifth water pipe group 082, and the front-end module 081 can communicate with each other. Water releases heat and temperature of the water is decreased when the water passes through the front-end module 081, and then the water enters the multi-way valve 05 through the fifth water pipe group 082. The fourth water pump 073 may inject, into the powertrain 071 through the fourth water pipe group 072, the water that passes through the multi-way valve 05. After absorbing heat in the powertrain 071, the water returns to the front-end module 081 through the multi-way valve 05 to release heat. In such circulation and flow, heat in the powertrain 071 is continuously transmitted to the front-end module 081 to cool the powertrain 071.

It should be noted that, when heat is dissipated for the powertrain 071, an operating status of the multi-way valve 05 is adjusted, so that the multi-way valve 05, the fifth water pipe group 082, the front-end module 081, the fourth water pump 073, the fourth water pipe group 072, and the powertrain 071 are in one circulation loop. Water releases heat and temperature of the water is decreased when the water passes through the front-end module 081, and then the water enters the multi-way valve 05 through the fifth water pipe group 082. The fourth water pump 073 may inject, into the powertrain 071 through the fourth water pipe group 072, the water that passes through the multi-way valve 05. After absorbing heat in the powertrain 071, the water returns to the front-end module 081 through the multi-way valve 05 to release heat. In such circulation and flow, heat in the powertrain 071 is continuously transmitted to the front-end module 081 to cool the powertrain 071.

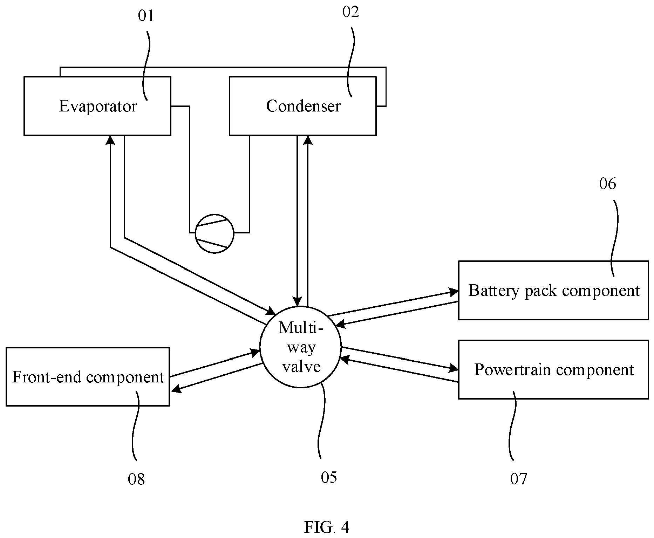

Refer to FIG. 3a to FIG. 3c and FIG. 4. On the basis of the foregoing embodiments, the heat exchange system may further include a housing 09, a first switch 094 and a second switch 095 may be disposed in the housing 09, and an air inlet 092 and an air outlet 093 are provided on the housing 09. The air duct 091 is formed between the air inlet 092 and the air outlet 093, and the first switch 094, the second switch 095, the evaporator 01, and the condenser 02 are all disposed in the air duct 091. The first switch 094, the second switch 095, the housing 09, the evaporator 01, and the condenser 02 may form an HVAC structure. The expansion valve 42 may also be disposed in the housing 09.

HVAC has functions of cooling, heating, and dehumidification. Refer to FIG. 3b. When HVAC performs cooling, the first switch 094 is in a first state, to be specific, an air channel of the evaporator 01 communicates with the air duct 091, and air in the air duct 091 may pass through the air channel of the evaporator 01. The second switch 095 is in a second state, to be specific, the second switch 095 blocks an air channel of the condenser 02, and the air in the air duct 091 does not pass through the air channel of the condenser 02. In this case, air may enter the air duct 091 through the air inlet 092, and the air that enters the air duct 091 may pass through the air channel of the evaporator 01. The air exchanges heat with the evaporator 01 to reduce temperature of the air. Finally, low-temperature air is discharged through the air outlet 093. In this manner, air can directly exchange heat with a low-temperature refrigerant in the condenser 02 without a need for secondary transfer, so that heat exchange efficiency can be improved, and a cooling speed can also be improved.

Refer to FIG. 3c. When HVAC performs heating, the first switch 094 is in a second state, to be specific, the first switch 094 blocks the air channel of the evaporator 01, and air in the air duct 091 cannot pass through the air channel of the evaporator 01. The second switch 095 is in a first state, and the air in the air duct 091 may pass through the air channel of the condenser 02. In this case, air may enter the air duct 091 through the air inlet 092, and the air that enters the air duct 091 may pass through the air channel of the condenser 02. The air exchanges heat with the condenser 02 to increase temperature of the air. Finally, high-temperature air is discharged through the air outlet 093. In this manner, air can directly exchange heat with a high-temperature refrigerant in the evaporator 01 without a need for secondary transfer, so that heat exchange efficiency can be improved, and a heating speed can also be improved.

Refer to FIG. 3a. When HVAC performs dehumidification, both the first switch 094 and the second switch 095 are in a first state, air in the air duct 091 may pass through the air channel of the evaporator 01 and may pass through the air channel of the condenser 02. In this case, air may enter the air duct 091 through the air inlet 092. The air that enters the air duct 091 may pass through the air channel of the evaporator 01, and exchange heat with the evaporator 01 to reduce temperature of the air. Then, the air passes through the air channel of the condenser 02, and exchanges heat with the condenser 02 to increase the temperature of the air, so that the temperature of the air is restored to normal temperature. Moisture in the air condenses when passing through the evaporator 01, and then is discharged from a condensate pipe of HVAC. Dried air is finally discharged through the air outlet 093.

It should be noted that, to make air that enters the air duct 091 quickly pass through the air channel of the evaporator 01 and/or the air channel of the condenser 02, a fan 096 may be disposed in the housing 09. The fan 096 is disposed, so that air can quickly flow in the air duct 091. In addition, a fresh air inlet 097 may be further provided on the housing 09, and the fresh air inlet 097 is located between the fan 096 and the air inlet 092.

In the foregoing embodiments, there may be one or more air inlets 092 and one or more air outlets 093, and quantities may be adjusted according to an actual requirement.

This application further provides a vehicle. The vehicle includes the heat exchange system in any one of the foregoing technical solutions. The vehicle may include a body and a cockpit. The air inlet 092 and the air outlet 093 of the housing 09 may be provided in the cockpit, so that a driver can change temperature in the cockpit based on a change of an external environment, to improve driving comfort.

The following describes a specific structure of the heat exchanger (the evaporator and the condenser) in the heat exchange system in the foregoing embodiments.

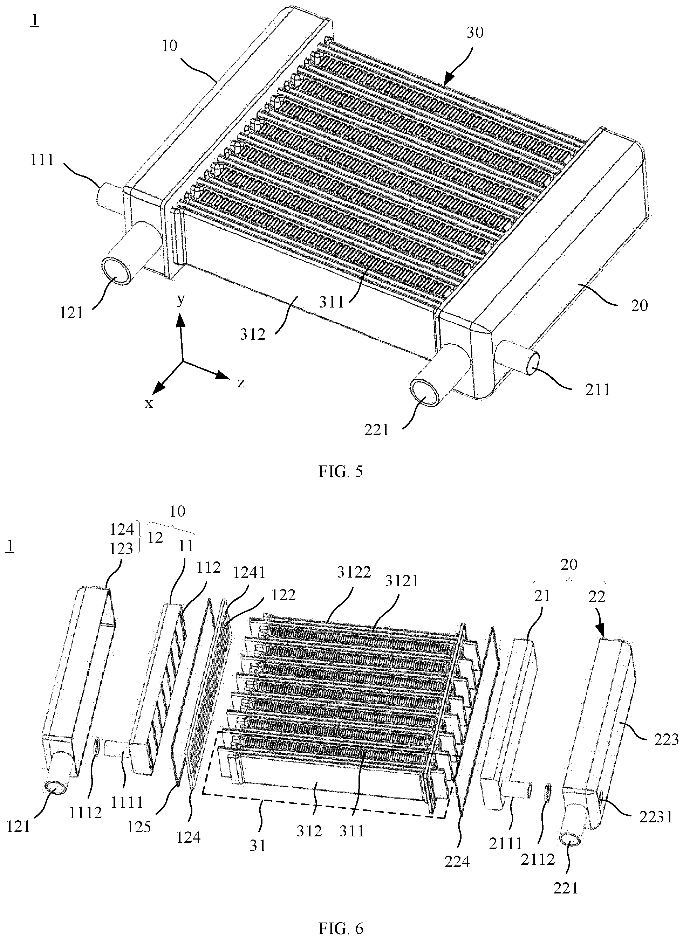

First, refer to FIG. 5 and FIG. 6. FIG. 5 is a schematic diagram of a structure of a heat exchanger in a heat exchange system according to an embodiment of this application. FIG. 6 is a partial schematic exploded view of the heat exchanger 1 shown in FIG. 5. In this embodiment of this application, the heat exchanger 1 may include a first collector 10, a second collector 20, and a heat exchange core 30. The first collector 10 and the second collector 20 are disposed at an interval, the first collector 10 may include a first chamber 11 and a second chamber 12 that are isolated from each other, and the second collector 20 may include a third chamber 21 and a fourth chamber 22 that are isolated from each other. The first chamber 11, the second chamber 12, the third chamber 21, and the fourth chamber 22 may be configured to store a fluid. The heat exchange core 30 may be located between the first collector 10 and the second collector 20. The first chamber 11 may communicate with the third chamber 21 through the heat exchange core 30, and the second chamber 12 may communicate with the fourth chamber 22 through the heat exchange core 30.

During specific implementation, the first collector 10 and the second collector 20 may be disposed in parallel, or may be disposed at a specific included angle. This is not limited in this application. An example in which the first collector 10 and the second collector 20 are parallel to each other is used for description in the embodiment shown in FIG. 5. The heat exchange core 30 may include a plurality of heat exchange units 31, and the plurality of heat exchange units 31 may be arranged in parallel between the first collector 10 and the second collector 20. An arrangement direction of the plurality of heat exchange units 31 is defined as a first direction (x direction). For example, when the first collector 10 and the second collector 20 are disposed in parallel, the first direction x may be approximately parallel to disposing directions of the first collector 10 and the second collector 20.

In this embodiment of this application, each heat exchange unit 31 may include at least one fin 311, and a plurality of airflow channels may be provided in the fin 311. The fin 311 includes an air intake side and an air exhaust side. When the heat exchanger 1 operates, air may enter each airflow channel from the air intake side of the fin 311, and then be discharged from the air exhaust side. During specific disposing, the air intake side and the air exhaust side of the fin 311 may be disposed opposite to each other along a second direction (y direction), and the second direction y and the first direction x may form a specific included angle. For example, in the embodiment shown in FIG. 5, the second direction y and the first direction x may be perpendicular to each other. In addition, when the first collector 10 and the second collector 20 are disposed in parallel, an arrangement direction of the first collector 10 and the second collector 20 is defined as a third direction (z direction). In this embodiment, the first direction x, the second direction y, and the third direction z may be perpendicular to each other.

In addition, each heat exchange unit 31 may further include at least one flow-guiding member 312, the at least one flow-guiding member 312 may be configured to form a first flow channel 3121 and a second flow channel 3122 that are isolated from each other, and the first flow channel 3121 and the second flow channel 3122 may be respectively used for flow of different fluids. In this way, with air that flows in the airflow channel of the fin 311 included, the heat exchange core 30 may allow three different types of fluids to pass through at the same time. For example, the first flow channel 3121 may be used for flow of a refrigerant, and the second flow channel 3122 may be used for flow of water; or the first flow channel 3121 may be used for flow of water, and the second flow channel 3122 may be used for flow of a refrigerant.

In each heat exchange unit, the first flow channel 3121, the second flow channel 3122, and the fin 311 may be arranged according to a specific rule, so that direct or indirect heat-conducting contact can be formed between the first flow channel 3121 and the second flow channel 3122, between the second flow channel 3122 and the fin 311, and between the first flow channel 3121 and the fin 311. In addition, in the entire heat exchange core 30, heat-conducting contact may also be formed between flow channels in adjacent heat exchange units 31. In this way, three types of fluids in the first flow channel 3121, the second flow channel 3122, the airflow channel of the fin 311 can exchange heat in the heat exchange core 30.

Still refer to FIG. 5 and FIG. 6. The first chamber 11 may be provided with a plurality of first flow-dividing openings 112, and the plurality of first flow-dividing openings 112 may be respectively connected to one end of the first flow channel 3121 of each heat exchange unit 31. The third chamber 21 may be provided with a plurality of third flow-dividing openings (not shown in the figure), and the plurality of third flow-dividing openings may be respectively connected to another end of the first flow channel 3121 of each heat exchange unit 31. In other words, the first chamber 11 may communicate with the third chamber 21 through a plurality of first flow channels 3121, and the first chamber 11, the first flow channels 3121, and the third chamber 21 may form a first flow path of the entire heat exchanger 1.

The first flow path may be provided with two openings that can communicate with the outside. In some embodiments, the two openings may be respectively provided on the first chamber 11 and the third chamber 21. For ease of differentiation, the opening that communicates with the outside on the first chamber 11 is referred to as a first opening 111, and the opening that communicates with the outside on the third chamber 21 is referred to as a third opening 211 below. The first flow path may be connected to a corresponding circulation loop through the first opening 111 and the third opening 211. For example, when the first flow channel 3121 is used for flow of a refrigerant, the circulation loop is a refrigerant loop.

Similarly, the second chamber 12 may be provided with a plurality of second flow-dividing openings 122, and the plurality of second flow-dividing openings 122 may be respectively connected to one end of the second flow channel 3122 of each heat exchange unit 31. The fourth chamber 22 may be provided with a plurality of fourth flow-dividing openings (not shown in the figure), and the plurality of fourth flow-dividing openings may be respectively connected to another end of the second flow channel 3122 of each heat exchange unit 31. In other words, the second chamber 12 may communicate with the fourth chamber 22 through a plurality of second flow channels 3122, and the second chamber 12, the second flow channels 3122, and the fourth chamber 22 may form a second flow path of the entire heat exchanger 1.

The second flow path may also be provided with two openings that can communicate with the outside. In some embodiments, the two openings may be respectively provided on the second chamber 12 and the fourth chamber 22. For ease of differentiation, the opening that communicates with the outside on the second chamber 12 is referred to as a second opening 121, and the opening that communicates with the outside on the fourth chamber 22 is referred to as a fourth opening 221 below. The second flow path may be connected to a corresponding circulation loop through the second opening 121 and the fourth opening 221. For example, when the second flow channel 3122 is used for flow of water, the circulation loop is a water-cooled loop.

It should be noted that, during specific implementation, two ends of the flow-guiding member 312 configured to form the first flow channel 3121 may be respectively welded to the first flow-dividing opening 112 and the third flow-dividing opening, to improve sealing performance corresponding to a case in which the first flow channel 3121 is connected to the first chamber 11 and the third chamber 21. Similarly, two ends of the flow-guiding member 312 configured to form the second flow channel 3122 may be respectively welded to the second flow-dividing opening 122 and the fourth flow-dividing opening, to improve sealing performance corresponding to a case in which the second flow channel 3122 is connected to the second chamber 12 and the fourth chamber 22.

In some embodiments, the first opening 111 of the first chamber 11 may be used as an inlet of the first flow path, and the third opening 211 of the third chamber 21 may be used as an outlet of the first flow path. In this case, the end that is of the first flow channel 3121 and that is connected to the first flow-dividing opening 112 is a liquid inlet of the first flow channel 3121, and the end that is of the first flow channel 3121 and that is connected to the third flow-dividing opening is a liquid outlet of the first flow channel 3121. A fluid in the first flow channel 3121 flows from left to right. In addition, the fourth opening 221 of the fourth chamber 22 may be used as an inlet of the second flow path, and the second opening 121 of the second chamber 12 may be used as an outlet of the second flow path. In this case, the end that is of the second flow channel 3122 and that is connected to the fourth flow-dividing opening is a liquid inlet of the second flow channel 3122, and the end that is of the second flow channel 3122 and that is connected to the second flow-dividing opening 122 is a liquid outlet of the second flow channel 3122. A fluid in the second flow channel 3122 flows from right to left. In this way, when the heat exchanger 1 operates, the fluid in the first flow channel 3121 and the fluid in the second flow channel 3122 flow in opposite directions, to form counterflow in the heat exchange core 30. Such a design helps improve heat exchange efficiency of the two fluids, and improve heat exchange performance of the entire heat exchanger 1.

Certainly, in some other embodiments, the fluid in the first flow channel 3121 and the fluid in the second flow channel 3122 may alternatively flow in a same direction. For example, when the end that is of the first flow channel 3121 and that is connected to the first flow-dividing opening 112 of the first chamber 11 is a liquid inlet of the first flow channel 3121, the end that is of the second flow channel 3122 and that is connected to the second flow-dividing opening 122 of the second chamber 12 may also be a liquid inlet of the second flow channel 3122. Specific disposing may be based on an actual application scenario of the heat exchanger 1. This is not limited in this application.

It should be noted that, orientation terms such as "left", "right", "above", and "below" used in the heat exchanger in embodiments of this application are mainly described based on a display orientation of the heat exchanger in FIG. 5, and constitute no limitation on an orientation of the heat exchanger in an actual application scenario.

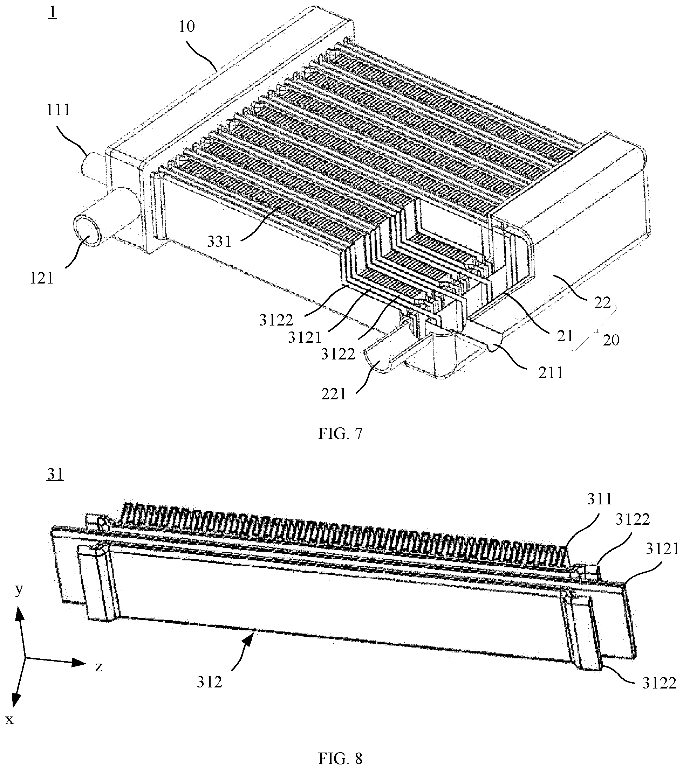

FIG. 7 is a partial sectional view of the heat exchanger shown in FIG. 5. Refer to FIG. 6 and FIG. 7. In some embodiments of this application, the first chamber 11 may be disposed inside the second chamber 12. When two types of fluids respectively enter the first chamber 11 and the second chamber 12, the entire first chamber 11 may be immersed in the fluid in the second chamber 12. In this way, the first chamber 11 may be in heat-conducting contact with the second chamber 12, so that the fluid in the first chamber 11 can exchange heat with the fluid in the second chamber 12. Similarly, the third chamber 21 may be disposed inside the fourth chamber 22. When two types of fluids respectively enter the third chamber 21 and the fourth chamber 22, the third chamber 21 may be immersed in the fluid in the fourth chamber 22. In this way, the third chamber 21 may be in heat-conducting contact with the fourth chamber 22, so that the fluid in the third chamber 21 can exchange heat with the fluid in the fourth chamber 22. In other words, the two types of fluids entering the heat exchanger 1 can exchange heat in the first flow channel 3121 and the second flow channel 3122, and can also exchange heat in the first collector 10 and the second collector 20, prolonging duration for heat exchange between the two types of fluids, and improving heat exchange effect of the heat exchanger.

During specific implementation, the second chamber 12 may include a first side wall 124 and a first housing 123 that is provided with an accommodating cavity. The first side wall 124 is disposed to face the second collector 20, and the first side wall 124 is detachably connected to the first housing 123, to seal the accommodating cavity of the second chamber 12. To avoid leakage of the fluid in the second chamber 12, a first sealing ring 125 may be disposed at a position at which the first side wall 124 is connected to the first housing 123, and the first sealing ring 125 may be squeezed between the first side wall 124 and the first housing 123, to improve sealing effect of the second chamber 12. A first through hole 1241 may be provided on the first side wall 124 to correspond to the first flow channel 3121 of the heat exchange unit 31, so that an end part of the flow-guiding member 312 forming the first flow channel 3121 can pass through the first through hole 1241 to be connected to the first flow-dividing opening 112.

It may be understood that, the second flow-dividing opening 122 of the second chamber 12 is also provided on the first side wall 124. When the first chamber 11 is disposed inside the second chamber 12, there may be a gap between an outer wall of the first chamber 11 and the first side wall 124, to prevent the first chamber 11 from blocking the second flow-dividing opening 122, so that the second flow-dividing opening 122 communicates with an entire inner cavity of the second chamber 12 through the gap. In this way, resistance of entering and leaving the second chamber 12 by the fluid through the second flow-dividing opening 122 is reduced, helping improve heat exchange efficiency of the heat exchanger 1. Similarly, there may also be a gap between the outer wall of the first chamber 11 and a side wall that is of the first housing 123 and on which the second opening 121 is provided, to prevent the first chamber 11 from blocking the second opening 121.

The fourth chamber 22 may include a second side wall (not shown in the figure) and a second housing 223 that is provided with an accommodating cavity. The second side wall is disposed to face the first collector 10, and the second side wall is detachably connected to the second housing 223, to seal the accommodating cavity of the fourth chamber 22. Similarly, to avoid leakage of the fluid in the fourth chamber 22, a second sealing ring 224 may be disposed at a position at which the second side wall is connected to the second housing 223, and the second sealing ring 224 may be squeezed between the second side wall and the second housing 223, to improve sealing effect of the fourth chamber 22. A second through hole may be provided on the second side wall to correspond to the first flow channel 3121 of the heat exchange unit 31, so that an end part of the flow-guiding member 312 forming the first flow channel 3121 can pass through the second through hole to be connected to the third flow-dividing opening.

In addition, the fourth flow-dividing opening of the fourth chamber 22 is provided on the second side wall. When the third chamber 21 is disposed inside the fourth chamber 22, there may be a gap between an outer wall of the third chamber 21 and the second side wall, to prevent the third chamber 21 from blocking the fourth flow-dividing opening, so that the fourth flow-dividing opening communicates with an entire inner cavity of the fourth chamber 22 through the gap. In this way, resistance of entering and leaving the fourth chamber 22 by the fluid through the fourth flow-dividing opening is reduced, helping improve heat exchange efficiency of the heat exchanger 1. Similarly, there may also be a gap between the outer wall of the third chamber 21 and a side wall that is of the second housing 223 and on which the fourth opening 221 is provided, to prevent the third chamber 21 from blocking the fourth opening 221.

In addition, for ease of connection between the first chamber 11 and another component outside the heat exchanger 1, a first extension pipe 1111 may be disposed at the first opening 111, a third through hole (not shown in the figure) may be provided on the first housing 123 to correspond to the first extension pipe 1111, and the first extension pipe 1111 may extend from the third through hole to the outside of the second chamber 12, so that the first chamber 11 can be connected to a corresponding circulation loop through the first extension pipe 1111. It should be noted that, a third sealing ring 1112 may be disposed at the third through hole, and the third sealing ring 1112 may be partially squeezed between an outer wall of the first extension pipe 1111 and an inner wall of the third through hole, to avoid leakage of the fluid in the second chamber 12.

Similarly, a second extension pipe 2111 may be disposed at the third opening 211, a fourth through hole 2231 may be provided on the second housing 223 to correspond to the second extension pipe 2111, and the second extension pipe 2111 may extend from the fourth through hole 2231 to the outside of the fourth chamber 22, so that the third chamber 21 can communicate with another component through the second extension pipe 2111. A fourth sealing ring 2112 may be disposed at the fourth through hole 2231, and the fourth sealing ring 2112 may be partially squeezed between an outer wall of the second extension pipe 2111 and an inner wall of the fourth through hole 2231, to avoid leakage of the fluid in the fourth chamber 22.

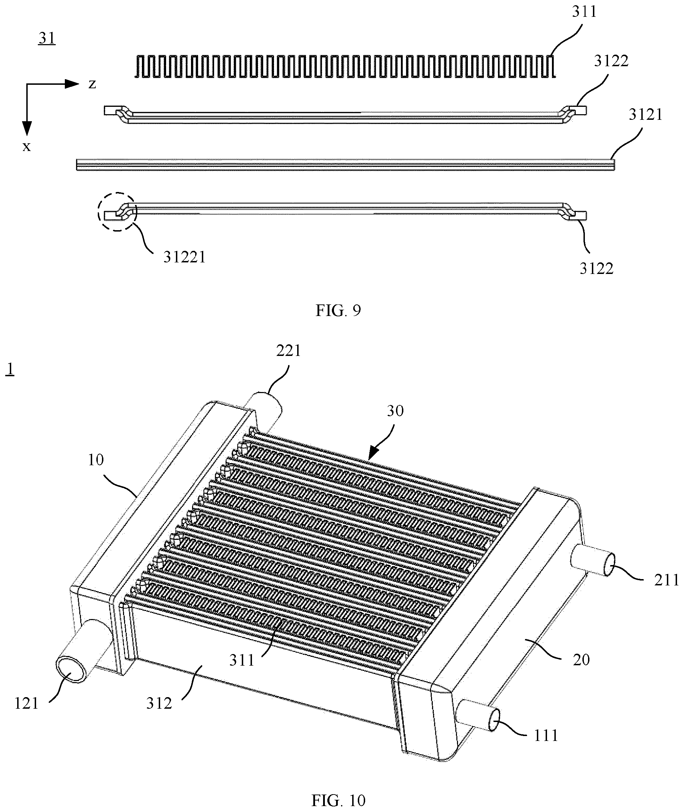

FIG. 8 is a schematic diagram of a structure of a heat exchange unit according to an embodiment of this application. FIG. 9 is a schematic exploded view of the heat exchange unit shown in FIG. 8. Refer to FIG. 8 and FIG. 9. In this embodiment, each heat exchange unit 31 may include three flow-guiding members 312 and one fin 311. The three flow-guiding members 312 may respectively form one first flow channel 3121 and two second flow channels 3122. Along a first direction x, the first flow channel 3121 may be located between the two second flow channels 3122, and the fin 311 may be located on a side that is of one of the second flow channels 3122 and that is away from the first flow channel 3121. During specific disposing, the three flow-guiding members 312 may be in a form of flat pipe, and a cross section of the fin 311 perpendicular to a second direction y may be approximately a square waveform shown in the figure, or may be in the shape of a wave, a zigzag, a snake, or the like. This is not limited in this application.

In the entire heat exchange core 30 including a plurality of heat exchange units 31, the flow-guiding member 312 configured to form the first flow channel 3121 may be in direct heat-conducting contact with the flow-guiding member 312 configured to form the second flow channel 3122, so that a fluid in the first flow channel 3121 can directly exchange heat with a fluid in the second flow channel 3122. The flow-guiding member 312 configured to form the second flow channel 3122 may be further in direct heat-conducting contact with the fin 311, so that the fluid in the second flow channel 3122 can directly exchange heat with air that flows through the fin 311. The flow-guiding member 312 configured to form the first flow channel 3121 may be in indirect heat-conducting contact with the fin 311 through the second flow channel 3122. When water or a refrigerant with a high heat conductivity flows in the second flow channel 3122, heat resistance of the flow-guiding member 312 may be negligible. Therefore, the fluid in the first flow channel 3121 can also exchange heat with the air that flows through the fin 311.

Refer to FIG. 6, FIG. 8, and FIG. 9. Each end of the two flow-guiding members 312 configured to form the second flow channels 3122 may be provided with a bending portion 31221, and the bending portion 31221 may be bent toward a side away from the first flow channel 3121, so that end parts of the three flow-guiding members 312 can be spaced apart from each other at two ends of the heat exchange unit 31. In this way, the second flow-dividing opening 122 and the first through hole 1241 may be separated from each other on the first side wall 124 of the second chamber 12, and the fourth flow-dividing opening and the second through hole may be separated from each other on the second side wall 224 of the fourth chamber 22. This helps improve sealing performance of the second chamber 12 and the fourth chamber 22.

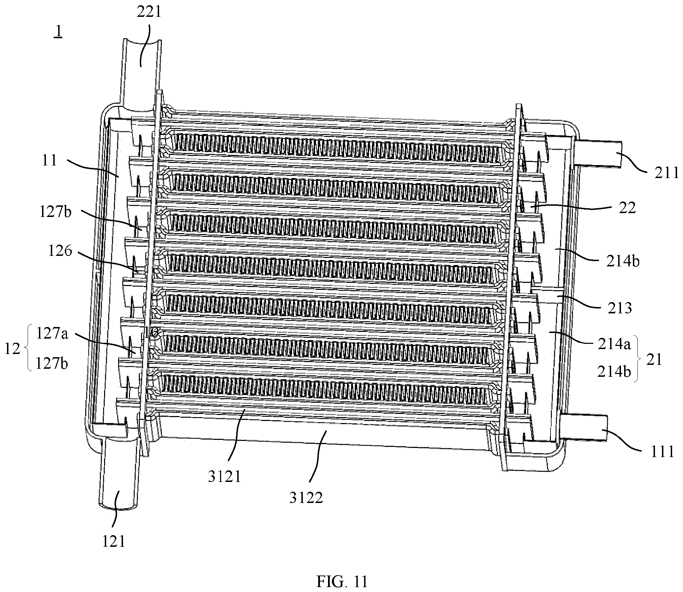

FIG. 10 is a schematic diagram of a structure of another heat exchanger according to an embodiment of this application. FIG. 11 is a sectional view of the heat exchanger shown in FIG. 10. In this embodiment, both openings of a first flow path may be provided on a first chamber 11, or both may be provided on a third chamber 21. In the embodiment shown in FIG. 10, an example in which both openings are provided on the third chamber 21 is used for description. The two openings of the first flow path are denoted as a first opening 111 and a third opening 211, and the first opening 111 and the third opening 211 may extend to the outside of a fourth chamber 22 through an extension pipe separately, so that the third chamber 21 can communicate with another component through the extension pipe 2111. A first baffle plate 213 may be disposed in the third chamber 21. The first baffle plate 213 may divide the third chamber 21 into a first sub-chamber 214a and a first sub-chamber 214b. The first opening 111 and the third opening 211 may be respectively provided on the first sub-chamber 214a and the first sub-chamber 214b, and allow the first sub-chamber 214a and the first sub-chamber 214b to communicate with the outside. Similarly, both openings of a second flow path may be provided on a second chamber 12, or both may be provided on the fourth chamber 22. In the embodiment shown in FIG. 10, an example in which both openings are provided on the second chamber 12 is used for description. The two openings of the second flow path are denoted as a second opening 121 and a fourth opening 221. A second baffle plate 126 may be disposed in the second chamber 12. The second baffle plate 126 may divide the second chamber 12 into a second sub-chamber 127a and a second sub-chamber 127b. The second opening 121 and the fourth opening 221 may be respectively provided on the second sub-chamber 127a and the second sub-chamber 127b, and allow the second sub-chamber 127a and the second sub-chamber 127b to communicate with the outside.

When the heat exchanger 1 operates, a fluid in a circulation loop in which the first flow path is located enters the first sub-chamber 214a of the third chamber 21 from the first opening 111, and flows to the first chamber 11 from the first sub-chamber 214a through a corresponding first flow channel 3121. Because the first chamber 11 has no opening that communicates with the outside, pressure in the first chamber 11 gradually increases as the fluid continuously enters. In this case, the fluid in the first chamber 11 may return to the third chamber 21 through a first flow channel 3121 corresponding to the first sub-chamber 214b, and then flows out of the heat exchanger 1 through the third opening 211 of the first sub-chamber 214b. Similarly, a fluid in a circulation loop in which the second flow path is located enters the second sub-chamber 127a of the second chamber 12 from the second opening 121, and flows to the fourth chamber 22 from the second sub-chamber 127a through a corresponding second flow channel 3122. Because the fourth chamber 22 has no opening that communicates with the outside, pressure in the fourth chamber 22 gradually increases as the fluid continuously enters. In this case, the fluid in the fourth chamber 22 may return to the second chamber 12 through a second flow channel 3122 corresponding to the second sub-chamber 127b, and then flows out of the heat exchanger 1 through the fourth opening 221 of the second sub-chamber 127b. It can be learned that, the fluid in the first flow path can implement, in the heat exchange unit 31, two processes: flowing from the third chamber 21 to the first chamber 11 and flowing from the first chamber 11 to the third chamber 21. The fluid in the second flow path can implement, in the heat exchange unit 31, two processes: flowing from the second chamber 12 to the fourth chamber 22 and flowing from the fourth chamber 22 to the second chamber 12. In this way, three types of fluids in the heat exchanger 1 can exchange heat more fully, and heat exchange effect of the heat exchanger 1 can be improved.

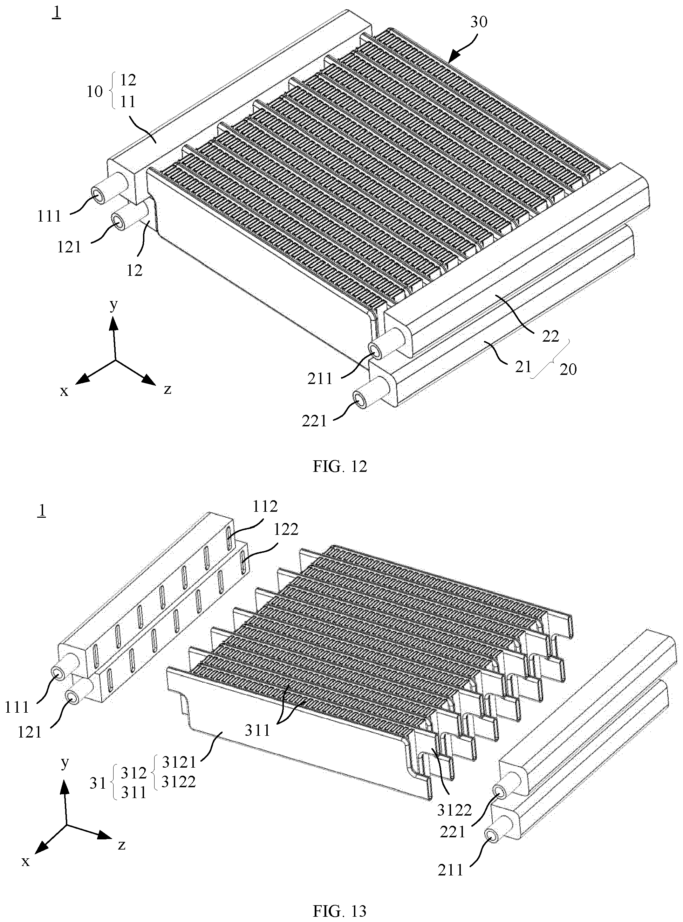

FIG. 12 is a schematic diagram of a structure of another heat exchanger according to an embodiment of this application. FIG. 13 is a schematic exploded view of a heat exchange unit shown in FIG. 12. In this embodiment, each heat exchange unit 31 may include two flow-guiding members 312 and two fins 311. The two flow-guiding members 312 may be in a form of flat pipe, and the two flow-guiding members 312 may respectively form one first flow channel 3121 and one second flow channel 3122. Along a first direction, the flow-guiding member 312 configured to form the first flow channel 3121 may be located between the two fins 311, and the flow-guiding member 312 configured to form the second flow channel 3122 may be located on a side that is of one of the fins 311 and that is away from the first flow channel 3121. Alternatively, the flow-guiding member 312 configured to form the second flow channel 3122 may be disposed between the two fins 311, and the flow-guiding member 312 configured to form the first flow channel 3121 may be located on a side that is of one of the fins 311 and that is away from the second flow channel 3122.

In addition, in this embodiment, a first opening 111 and a third opening 211 may be respectively provided on a first chamber 11 and a third chamber 21, or may be both provided on the first chamber 11 or the third chamber 21. A second opening 121 and a fourth opening 221 may be respectively provided on a second chamber 12 and a fourth chamber 22, or may be both provided on the second chamber 12 or the fourth chamber 22. This is not limited in this application. In the embodiment shown in FIG. 12, an example in which each chamber is provided with an opening is used for description.

For example, the flow-guiding member 312 configured to form the second flow channel 3122 is located between the two fins 311. In an entire heat exchange core 30 including a plurality of heat exchange units 31, the flow-guiding member 312 configured to form the first flow channel 3121 may be in direct heat-conducting contact with the fin 311, so that a fluid in the first flow channel 3121 can directly exchange heat with air that flows through the fin 311. The flow-guiding member 312 configured to form the second flow channel 3122 may also be in direct heat-conducting contact with the fin 311, so that a fluid in the second flow channel 3122 can directly exchange heat with air that flows through the fin 311. The flow-guiding member 312 configured to form the first flow channel 3121 may be in heat-conducting contact with the flow-guiding member 312 configured to form the second flow channel 3122 through the fin. Because heat resistance of the fin 311 is small, the fluid in the first flow channel 3121 can also exchange heat with the fluid in the second flow channel 3122.

In a possible embodiment, the first chamber 11 and the second chamber 12 may be disposed in parallel along a second direction y, and an outer wall of the first chamber 11 is in contact with an outer wall of the second chamber 12, so that a fluid in the first chamber 11 can exchange heat with a fluid in the second chamber 12. Similarly, the third chamber 21 and the fourth chamber 22 may be disposed in parallel along the second direction y, and an outer wall of the third chamber 21 is in contact with an outer wall of the fourth chamber 22, so that a fluid in the third chamber 21 can exchange heat with a fluid in the fourth chamber 22.

In the foregoing embodiment, at an end at which the first flow channel 3121 communicates with the first chamber 11, an open structure is used at a position that is on the flow-guiding member 312 configured to form the first flow channel 3121 and that corresponds to a first flow-dividing opening 112 of the first chamber 11, and a closed structure is used at a position corresponding to the second chamber 12. At an end at which the first flow channel 3121 communicates with the third chamber 21, an open structure is used at a position that is on the flow-guiding member 312 configured to form the first flow channel 3121 and that corresponds to a third flow-dividing opening (not shown in the figure) of the third chamber 21, and a closed structure is used at a position corresponding to the fourth chamber 22. This prevents the fluid in the first flow channel 3121 from flowing to a position outside the first chamber 11 or the third chamber 21. Similarly, at an end at which the second flow channel 3122 communicates with the second chamber 12, an open structure is used at a position that is on the flow-guiding member 312 configured to form the second flow channel 3122 and that corresponds to a second flow-dividing opening of the second chamber 12, and a closed structure is used at a position corresponding to the first chamber 11. At an end at which the second flow channel 3122 communicates with the fourth chamber 22, an open structure is used at a position that is on the flow-guiding member 312 configured to form the second flow channel 3122 and that corresponds to a fourth flow-dividing opening (not shown in the figure) of the fourth chamber 22, and a closed structure is used at a position corresponding to the third chamber 21. This prevents the fluid in the second flow channel 3122 from flowing to a position outside the second chamber 12 or the fourth chamber 22.

In addition, for a first collector 10, the first chamber 11 may be located above the second chamber 12; and for a second collector 20, the fourth chamber 22 may be located above the third chamber 21. In other words, along a third direction z, the first chamber 11 is opposite to the fourth chamber 22, and the second chamber 12 is opposite to the third chamber 21. When the fluid in the first flow channel 3121 flows from left to right, because the first chamber 11 on the left side is located above and the third chamber 21 on the right side is located below, the fluid in the first flow channel 3121 has a trend of flowing from top to bottom. When the fluid in the second flow channel 3122 flows from right to left, because the fourth chamber 22 on the right side is located above and the second chamber 12 on the right side is located below, the fluid in the second flow channel 3122 also has a trend of flowing from top to bottom. In this way, when air passes through an airflow channel of the fin 311 from bottom to top, the air forms counterflow with the fluid in the first flow channel 3121 and the fluid in the second flow channel 3122, improving heat exchange efficiency of the three types of fluids.

It should be understood that, in some other embodiments, for disposing manners of the first collector 10 and the second collector 20, reference may be made to disposing manners in the foregoing embodiment, that is, the first chamber 11 is disposed inside the second chamber 12, and the third chamber 21 is disposed inside the fourth chamber 22. For specific structures of the two collectors, refer to descriptions in the foregoing embodiment. Details are not described herein again.

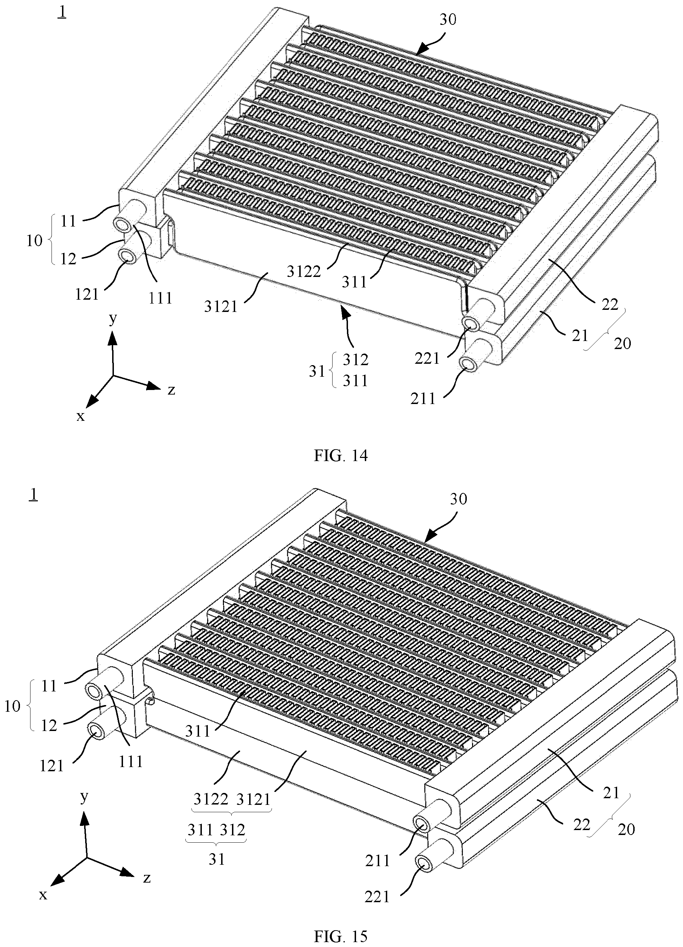

FIG. 14 is a schematic diagram of a structure of another heat exchanger according to an embodiment of this application. Refer to FIG. 14. In this embodiment, each heat exchange unit 31 may include two flow-guiding members 312 and one fin 311. The two flow-guiding members 312 may be in a form of flat pipe, and the two flow-guiding members 312 may respectively form one first flow channel 3121 and one second flow channel 3122. The first flow channel 3121, the second flow channel 3122, and the fin 311 are disposed in parallel along a first direction x. During specific disposing, the fin 311 may be located between the first flow channel 3121 and the second flow channel 3122, or located on a side that is of the first flow channel 3121 and that is away from the second flow channel 3122, or located on a side that is of the second flow channel 3122 and that is away from the first flow channel 3121. This is not limited in this application.

In addition, in this embodiment, a first opening 111 and a third opening 211 may be respectively provided on a first chamber 11 and a third chamber 21, or may be both provided on the first chamber 11 or the third chamber 21. A second opening 121 and a fourth opening 221 may be respectively provided on a second chamber 12 and a fourth chamber 22, or may be both provided on the second chamber 12 or the fourth chamber 22. This is not limited in this application. In the embodiment shown in FIG. 14, an example in which each chamber is provided with an opening is used for description.

For example, the fin 311 is located on a side that is of the second flow channel 3122 and that is away from the first flow channel 3121. In an entire heat exchange core 30 including a plurality of heat exchange units 31, the flow-guiding member 312 configured to form the first flow channel 3121 may be in direct heat-conducting contact with the flow-guiding member 312 configured to form the second flow channel 3122, so that a fluid in the first flow channel 3121 can directly exchange heat with a fluid in the second flow channel 3122. The flow-guiding member 312 configured to form the second flow channel 3122 may be further in direct heat-conducting contact with the fin 311, so that the fluid in the second flow channel 3122 can directly exchange heat with air that flows through the fin 311. The flow-guiding member 312 configured to form the first flow channel 3121 may be in indirect contact with the fin 311 through the second flow channel 3122. When water or a refrigerant with a high heat conductivity flows in the second flow channel 3122, heat resistance of the flow-guiding member 312 may be negligible. Therefore, the fluid in the first flow channel 3121 can also exchange heat with the air that flows through the fin 311.

In this embodiment, a first collector 10 may use a built-in structure in which the first chamber 11 is disposed inside the second chamber 12, or may use a parallel structure in which the first chamber 11 and the second chamber 12 are arranged along a second direction y. Similarly, a second collector 20 may use a built-in structure in which the third chamber 21 is disposed inside the fourth chamber 22, or may use a parallel structure in which the third chamber 21 and the fourth chamber 22 are arranged along the second direction y. This is not limited in this application. For specific setting manners of the built-in structure and the parallel structure, refer to descriptions in the foregoing embodiment. Details are not described herein again.

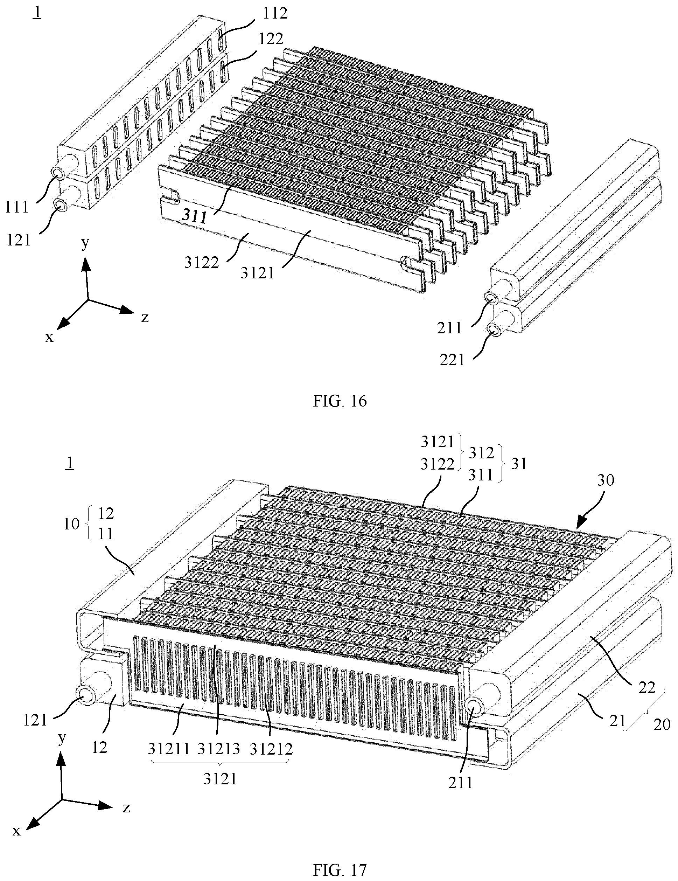

FIG. 15 is a schematic diagram of a structure of another heat exchanger according to an embodiment of this application. FIG. 16 is a partial schematic exploded view of the heat exchanger shown in FIG. 15. Refer to FIG. 15 and FIG. 16. In this embodiment, each heat exchange unit 31 may include two flow-guiding members 312 and one fin 311. The two flow-guiding members 312 may be in a form of flat pipe, and the two flow-guiding members 312 may respectively form one first flow channel 3121 and one second flow channel 3122. During specific implementation, the two flow-guiding members 312 may be disposed in parallel along a second direction y to form a flow-guiding component, and outer walls of the two flow-guiding members 312 are in contact with each other. The flow-guiding component formed by the two flow-guiding members 312 and the fin 311 may be disposed in parallel along a first direction x. The flow-guiding member 312 configured to form the first flow channel 3121 may be located above the flow-guiding member 312 configured to form the second flow channel 3122, or the flow-guiding member 312 configured to form the second flow channel 3122 may be located above the flow-guiding member 312 configured to form the first flow channel 3121.

In addition, in this embodiment, a first opening 111 and a third opening 211 may be respectively provided on a first chamber 11 and a third chamber 21, or may be both provided on the first chamber 11 or the third chamber 21. A second opening 121 and a fourth opening 221 may be respectively provided on a second chamber 12 and a fourth chamber 22, or may be both provided on the second chamber 12 or the fourth chamber 22. This is not limited in this application. In the embodiment shown in FIG. 15, an example in which each chamber is provided with an opening is used for description.

In an entire heat exchange core 30 including a plurality of heat exchange units 31, the flow-guiding member 312 configured to form the first flow channel 3121 may be in direct heat-conducting contact with the flow-guiding member 312 configured to form the second flow channel 3122, so that a fluid in the first flow channel 3121 can directly exchange heat with a fluid in the second flow channel 3122. The flow-guiding member 312 configured to form the second flow channel 3122 may be further in direct heat-conducting contact with the fin 311, so that the fluid in the second flow channel 3122 can directly exchange heat with air that flows through the fin 311. The flow-guiding member 312 configured to form the first flow channel 3121 may also be in direct heat-conducting contact with the fin 311, so that the fluid in the first flow channel 3121 can directly exchange heat with the air that flows through the fin 311.

In this embodiment of this application, a first collector 10 may use a built-in structure in which the first chamber 11 is disposed inside the second chamber 12, or may use a parallel structure in which the first chamber 11 and the second chamber 12 are arranged along a second direction y. Similarly, a second collector 20 may use a built-in structure in which the third chamber 21 is disposed inside the fourth chamber 22, or may use a parallel structure in which the third chamber 21 and the fourth chamber 22 are arranged along the second direction y. This is not limited in this application. Different from the foregoing embodiment, when the first collector 10 and the second collector 20 are of a parallel structure, because the first flow channel 3121 and the second flow channel 3122 are disposed vertically in parallel, the first chamber 11 and the third chamber 21 may be disposed opposite to each other along a third direction z, to facilitate connection of two ends of the first flow channel 3121 to the first chamber 11 and the third chamber 21. In addition, vertical positions of the first chamber 11 and the third chamber 21 may depend on a vertical position of the first flow channel. For example, when the first flow channel 3121 is located above the second flow channel 3122, the first chamber 11 and the third chamber 21 may be respectively located above the second chamber 12 and the fourth chamber 22. It may be understood that, after positions of the first flow channel 3121, the first chamber 11, and the third chamber 21 are determined, positions of the second flow channel 3122, the second chamber 12, and the fourth chamber 22 may be determined accordingly. Details are not described herein again.

It should be noted that, in the foregoing embodiments, for fluids in the first flow channel 3121 and the second flow channel 3122 to exchange heat with air that flows through the fin 311 better, corresponding paths may be disposed in the first flow channel 3121 and the second flow channel 3122. In this way, the fluids in the two flow channels can form counterflow with air when flowing along the paths, to improve heat exchange efficiency. Refer to FIG. 17. In an embodiment shown in FIG. 17, an example in which each heat exchange unit 31 includes two flow-guiding members 312 and two fins 311 is used for description. During specific implementation, the flow-guiding member 312 configured to form a first flow channel 3121 may be provided with a first path 31211, a second path 31212, and a third path 31213. The first path 31211 and the second path 31212 may be separately provided along a third direction z, the first path 31211 communicates with a first flow-dividing opening of a first chamber 11, and the second path 31212 communicates with a third flow-dividing opening of a third chamber 21. The third path 31213 may be provided along a second direction y, and two ends of the third path 31213 communicate with the first path 31211 and 31212 respectively. For example, the first path 31211 and the second path 31212 may be respectively provided on two sides of the first flow channel 3121 along the second direction y, that is, an upper side and a lower side of the first flow channel 3121. There may be a plurality of third paths 31213, and the plurality of third paths 31213 may be provided in parallel along the third direction z. When the heat exchanger 1 operates, a fluid in the first chamber 11 enters the first path 31211 of the first flow channel 3121 through the first flow-dividing opening, then enters the second path 31212 from the first path 31211 through the third path 31213, and finally flows into the third chamber 21 through the second path 31212. When the fluid flows through the third path 31213 from top to bottom, air may pass through an airflow channel of the fin 311 from bottom to top. In this way, the fluid and the air can form counterflow, to improve heat exchange efficiency.

Similarly, the flow-guiding member 312 configured to form a second flow channel 3122 may be provided with a fourth path, a fifth path, and a sixth path. The fourth path and the fifth path may be separately provided along the third direction, the fourth path communicates with a second flow-dividing opening of a second chamber, and the fifth path communicates with a fourth flow-dividing opening of a fourth chamber. The sixth path may be provided along the second direction y, and two ends of the sixth path communicate with the fourth path and the fifth path respectively. For example, the fourth path and the fifth path may be respectively provided on two sides of the second flow channel 3122 along the second direction y, that is, a lower side and an upper side of the second flow channel 3122. There may be a plurality of sixth paths, and the plurality of sixth paths may be provided in parallel along the third direction. When the heat exchanger 1 operates, a fluid in the fourth chamber 22 enters the fifth path of the second flow channel 3122 through the fourth flow-dividing opening, then enters the fourth path from the fifth path through the sixth path, and finally flows into the second chamber 12 through the fourth path. When the fluid flows through the sixth path from top to bottom, air may pass through the airflow channel of the fin 311 from bottom to top. In this way, the fluid and the air can form counterflow, to improve heat exchange efficiency.

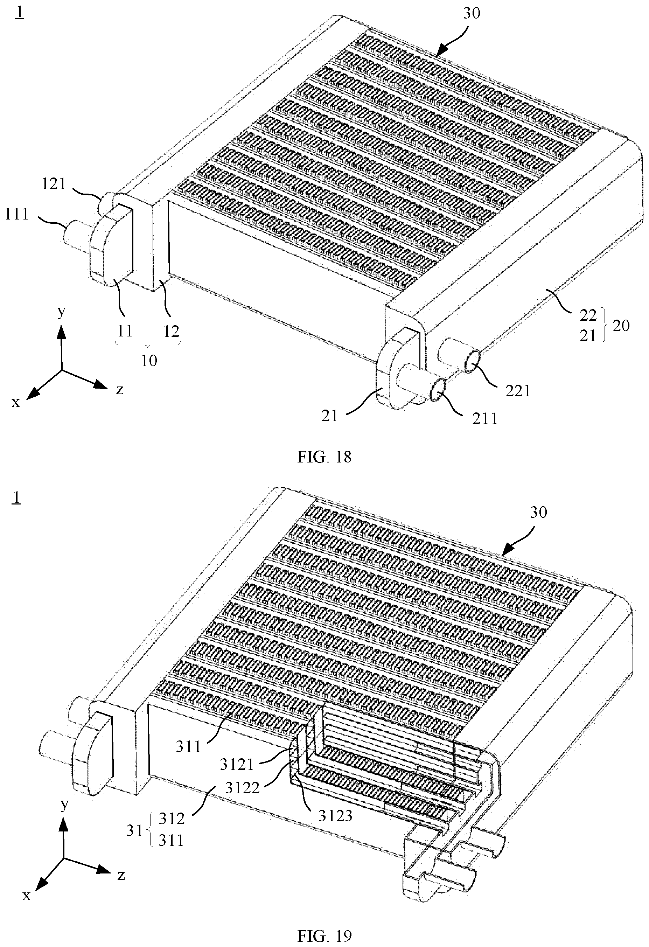

FIG. 18 is a schematic diagram of a structure of another heat exchanger according to an embodiment of this application. FIG. 19 is a partial schematic exploded view of the heat exchanger shown in FIG. 18. Refer to FIG. 18 and FIG. 19. In this embodiment, each heat exchange unit 31 may include one flow-guiding member 312 and one fin 311, and the flow-guiding member 312 and the fin 311 may be disposed in parallel along a first direction x. A dividing plate 3123 may be disposed inside the flow-guiding member 312, and there may be one or more dividing plates 3123. The dividing plate 3123 is used, so that the flow-guiding member 312 is divided into a first flow channel 3121 and a second flow channel 3122. During specific implementation, there may be one or more dividing plates 3123, so that there may be one or more first flow channels 3121 and one or more second flow channels 3122 formed through dividing. It may be understood that, when there are a plurality of first flow channels 3121 and a plurality of second flow channels 3122, the first flow channels 3121 and the second flow channels 3122 may be alternately arranged along a second direction y, to improve heat exchange effect of a fluid in the first flow channel 3121 and a fluid in the second flow channel 3122.

In addition, in this embodiment, a first opening 111 and a third opening 211 may be respectively provided on a first chamber 11 and a third chamber 21, or may be both provided on the first chamber 11 or the third chamber 21. A second opening 121 and a fourth opening 221 may be respectively provided on a second chamber 12 and a fourth chamber 22, or may be both provided on the second chamber 12 or the fourth chamber 22. This is not limited in this application. In the embodiment shown in FIG. 18, an example in which each chamber is provided with an opening is used for description.

In an entire heat exchange core 30 including a plurality of heat exchange units 31, the first flow channel 3121 may be in direct heat-conducting contact with the second flow channel 3122, so that the fluid in the first flow channel 3121 can directly exchange heat with the fluid in the second flow channel 3122. The flow-guiding member 312 may be in direct heat-conducting contact with the fin 311, so that the fluid in the first flow channel 3121 and the fluid in the second flow channel 3122 can directly exchange heat with air that flows through the fin 311.

In this embodiment, both a first collector 10 and a second collector 20 may use a built-in structure, to be specific, the first chamber 11 is disposed inside the second chamber 12, and the third chamber 21 is disposed inside the fourth chamber 22. During specific disposing, a side wall of the flow-guiding member 312 corresponding to each first flow channel 3121 may be appropriately extended, and correspondingly, the dividing plate 3123 may also be extended, so that two ends of the first flow channel 3121 are extended beyond the second flow channel, to facilitate connection of the first flow channel 3121 to the first chamber 11 and the third chamber 21.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application should be subject to the protection scope of the claims.

## Claims

1. A heat exchange system, comprising: a multi-way valve, an air duct, and at least one heat exchanger disposed in the air duct, wherein the heat exchanger is provided with an air channel through which air passes, a water inlet and a water outlet of the at least one heat exchanger communicate with the multi-way valve through a water pipe group, a refrigerant inlet of the at least one heat exchanger communicates with a refrigerant outlet of the at least one heat exchanger through a refrigerant pipe group, and an electronic expansion valve is disposed on the refrigerant pipe group; and
the multi-way valve is further configured to communicate with a heat exchange unit, and when heat exchange is performed on the heat exchange unit, the multi-way valve makes the heat exchange unit, the multi-way valve, the water pipe group, and the heat exchanger be in one circulation loop.

2. The heat exchange system according to claim 1, wherein there are two heat exchangers, the two heat exchangers are disposed in the air duct, the water pipe group comprises a first water pipe group and a second water pipe group, and the two heat exchangers are an evaporator and a condenser;
a water inlet of the evaporator and a water outlet of the evaporator communicate with the multi-way valve through the first water pipe group, and a water inlet of the condenser and a water outlet of the condenser communicate with the multi-way valve through the second water pipe group; and
a refrigerant outlet of the evaporator communicates with a refrigerant inlet of the condenser through the refrigerant pipe group, and a refrigerant outlet of the condenser communicates with a refrigerant inlet of the evaporator through the refrigerant pipe group.

3. The heat exchange system according to claim 2, further comprising a compressor, wherein the compressor is disposed between the refrigerant outlet of the evaporator and the refrigerant inlet of the condenser

4. The heat exchange system according to claim 2 or 3, further comprising a first water pump, wherein the first water pump is disposed in the first water pipe group or the second water pipe group; or
the first water pump is disposed in each of the first water pipe group and the second water pipe group.

5. The heat exchange system according to claim 2 or 3, wherein the heat exchange unit comprises a battery pack component;
the battery pack component comprises a battery pack and a third water pipe group, the battery pack communicates with the multi-way valve through the third water pipe group, and a third water pump is disposed in the third water pipe group;
when heat is dissipated for the battery pack, the multi-way valve is configured for communication of the evaporator, the first water pipe group, the third water pump, the third water pipe group, and the battery pack; and
when the battery pack is heated, the multi-way valve is configured for communication of the condenser, the second water pipe group, the third water pump, the third water pipe group, and the battery pack.

6. The heat exchange system according to claim 2, 3, or 5, wherein the heat exchange unit further comprises a powertrain component;
the powertrain component comprises a powertrain and a fourth water pipe group, the powertrain communicates with the multi-way valve through the fourth water pipe group, and a fourth water pump is disposed in the fourth water pipe group; and
when heat is dissipated for the powertrain, the multi-way valve is configured to communicate with the evaporator, the first water pipe group, the fourth water pump, the fourth water pipe group, and the powertrain.

7. The heat exchange system according to claim 2, 3, or 5, wherein the heat exchange unit further comprises a powertrain component and a front-end component;
the powertrain component comprises a powertrain and a fourth water pipe group, the powertrain communicates with the multi-way valve through the fourth water pipe group, and a fourth water pump is disposed in the fourth water pipe group;
the front-end component comprises a front-end module and a fifth water pipe group, and the front-end module communicates with the multi-way valve through the fifth water pipe group; and
when heat is dissipated for the powertrain, the multi-way valve is configured to communicate with the powertrain, the fourth water pipe group, the fourth water pump, the fifth water pipe group, and the front-end module.

8. The heat exchange system according to any one of claims 2 to 7, further comprising a housing, wherein an air inlet and an air outlet are provided on the housing, the air duct is formed between the air inlet and the air outlet, and both the evaporator and the condenser are disposed in the air duct.

9. The heat exchange system according to claim 8, further comprising a first switch, wherein
the first switch is disposed in the housing, the first switch has a first state and a second state, when the first switch is in the first state, air in the air duct passes through an air channel of the evaporator, and when the first switch is in the second state, the air in the air duct does not pass through the air channel of the evaporator

10. The heat exchange system according to claim 9, further comprising a second switch, wherein
the second switch is disposed in the housing, when the second switch is in a first state, the air in the air duct passes through an air channel of the condenser, and when the second switch is in a second state, the air in the air duct does not pass through the air channel of the condenser.

11. The heat exchange system according to any one of claims 8 to 10, further comprising a fan, wherein the fan is located in the air duct of the housing.

12. The heat exchange system according to claim 11, wherein a fresh air inlet is further provided on the housing, and the fresh air inlet is located between the fan and the air inlet, or the fresh air inlet corresponds to the fan.

13. A vehicle, wherein the vehicle has the heat exchange system according to any one of claims 1 to 12.
